# EUROPEAN PATENT APPLICATION

(11) **EP 3 981 951 A1**
(43) Date of publication of application: **13.04.2022**
(21) Application number: 21201285.0
(22) Date of filing: 06.10.2021
(51) Int. Cl.: F01D 5/14, F01D 5/28

(54) **HYBRID VANES FOR GAS TURBINE ENGINES**

(30) Priority: 06.10.2020 US 202017063921
(71) Applicant: PRATT & WHITNEY CANADA CORP., Longueuil, Québec J4G 1A1 (CA)
(72) Inventor: CHEUNG, Kin-Leung, (01BE5) Longueuil, J4G 1A1 (CA)
(74) Representative: Dehns

(57) **Abstract**

A hybrid vane (30) for a gas turbine engine (10). The hybrid vane (30) comprises an airfoil (36) having an inner core (50) composed of a fiber-reinforced thermoplastic composite (54). A longitudinal axis (L) of the hybrid vane (30) extends between a vane root (32) and a vane tip (34). The hybrid vane (30) further comprises a metallic outer layer (60) at least partially covering the inner core (50).

## Description

### TECHNICAL FIELD

The disclosure relates generally to gas turbine engines and, more particularly, to hybrid vanes for gas turbine engines.

### BACKGROUND

Compressor vanes and other airfoils in aero gas turbine engines are generally designed to have low maintenance costs. This is typically achieved by: designing the vane to be field replaceable; designing the vane such that repair is as simple as possible; and designing the vane such that it is sufficiently robust and not prone to foreign object damage (FOD) and erosion. Usually, gas turbine vanes are manufactured from aluminum, steel or other metal and/or metal alloys. More recently, composite-based vanes have been used to reduce weight and increase strength, however limitations exist with existing composite vanes. The cost and lead times of manufacturing existing composite vanes is greater when compared to forged metal stampings that were historically used in gas turbine engines.

Accordingly, improvements are desirable.

### SUMMARY

In one aspect, there is provided a hybrid vane for a gas turbine engine, the hybrid vane comprising an airfoil having an inner core composed of a fiber-reinforced thermoplastic composite, a longitudinal axis of the hybrid vane extending between a vane root and a vane tip, and a metallic outer layer at least partially covering the inner core.

The hybrid vane as defined above and herein may further include one or more of the following additional features, in whole or in part, and in any combination.

In certain embodiments, the fiber-reinforced thermoplastic composite includes a plurality of stacked fiber layers forming a core thickness in a direction normal to the longitudinal axis, each layer including a plurality of fibers oriented in a direction parallel with one another.

In certain embodiments, the plurality of fibers are oriented in a direction parallel to the longitudinal axis.

In certain embodiments, the directions of each of the plurality of layers are oriented symmetrically with respect to a mid-plane bisecting the stacked fiber layers.

In certain embodiments, the hybrid vane is dynamically tunable by varying a thickness of the metallic outer layer and/or a thickness of the inner core.

In certain embodiments, the fiber-reinforced thermoplastic inner core includes PAEK, PEEK, PEKK, PPS, carbon, glass and/or polyaramid.

In certain embodiments, the metallic outer layer is an electroless plate.

In certain embodiments, the metallic outer layer includes two or more metallic layers.

In certain embodiments, the two or more metallic layers include one or more electroless plates and/or electroplates.

In certain embodiments, the two or more metallic layers have a thickness of less than or equal to 0.008 inches.

In certain embodiments, the metallic outer layer includes a thickness of greater than or equal to 0.0005 inches.

In certain embodiments, the metallic outer layer includes nickel, copper, iron, and/or cobalt.

In another aspect, there is provided a method of manufacturing a hybrid vane for a gas turbine engine, the method comprising forming an airfoil out of a fiber-reinforced thermoplastic composite to form an inner core, a longitudinal axis of the hybrid vane extending between a vane root and a vane tip, and applying at least one layer of a metal coating onto the inner core, the metal coating at least partially covering the inner core and defining an outer structural surface of the vane.

In a further aspect, there is provided a method of dynamically tuning a hybrid vane for a gas turbine engine, the vane including an airfoil having an inner core composed of a fiber-reinforced thermoplastic composite and a metallic outer layer at least partially covering the inner core, the method comprising varying a thickness of the inner core and/or a thickness of the metallic outer layer to avoid a natural frequency of the vane at engine operating conditions.

The method(s) as defined above and herein may further include one or more of the following additional features and/or steps, in whole or in part, and in any combination.

In certain embodiments, the step of forming the airfoil further includes compression molding the inner core.

In certain embodiments, the step of applying further includes fully encapsulating the inner core with the metal coating.

In certain embodiments, the step of forming an airfoil further includes forming the core out of PAEK, PEEK, PEKK, PPS, carbon, glass and/or polyaramid.

In certain embodiments, the step of applying further includes applying one or more electroless plate and/or electroplates including nickel, copper, iron, and/or cobalt.

In certain embodiments, the method further comprises varying a thickness of the inner core and/or a thickness of the metal coating to dynamically tune the hybrid vane.

In certain embodiments, forming the airfoil further includes stacking a plurality of fiber layers, each layer including a plurality of fibers, to form a thickness in a direction normal to the longitudinal axis, and orienting the plurality of fibers in a direction parallel to the longitudinal axis.

In certain embodiments, forming the airfoil further includes stacking a plurality of fiber layers, each layer including a plurality of fibers, to form a thickness in a direction normal to the longitudinal axis, and orienting the fibers on each layer such that the plurality of layers are oriented symmetrically with respect to at least one centrally stacked fiber layer.

### BRIEF DESCRIPTION OF THE DRAWINGS

Reference is now made to the accompanying figures in which:
Fig. 1 is a schematic cross sectional view of a gas turbine engine;
Fig. 2 is a side perspective view of a hybrid vane for the gas turbine engine of Fig. 1, according to an embodiment of the present disclosure;
Figs. 3A and 3B are cross-sectional views of the hybrid vane of Fig. 2, taken along the line III-III in Fig. 2; and
Figs. 4A-4C are exemplary exploded schematic views of various fiber layer orientations for the hybrid vane of Fig. 2.

### DETAILED DESCRIPTION

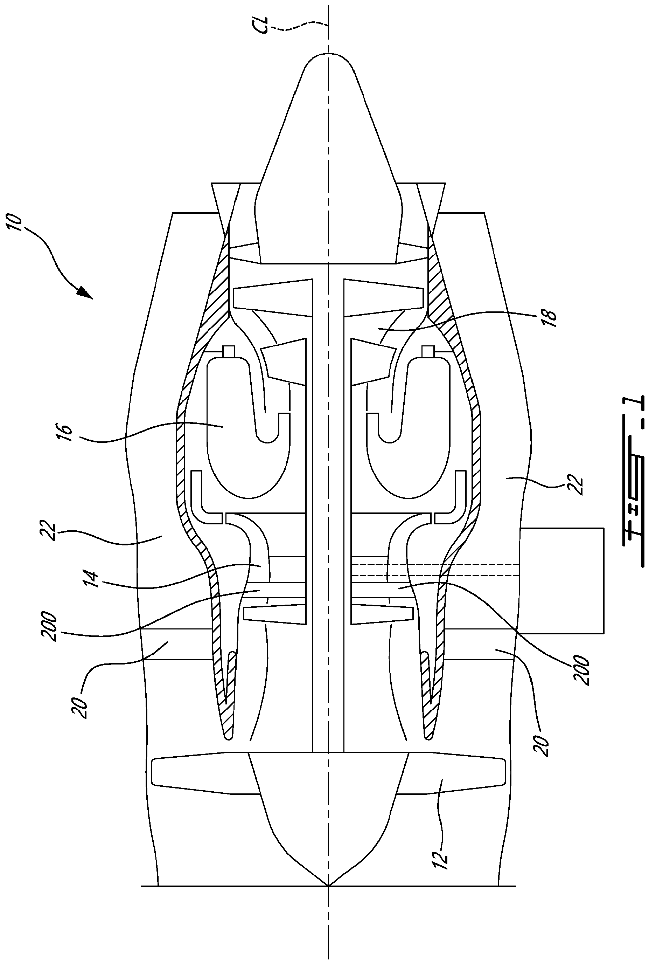

FIG. 1 illustrates a gas turbine engine 10 of a type preferably provided for use in subsonic flight, generally comprising in serial flow communication a fan 12 through which ambient air is propelled, a multistage compressor 14 for pressurizing the air, a combustor 16 in which the compressed air is mixed with fuel and ignited for generating an annular stream of hot combustion gases, and a turbine section 18 including at least one turbine for extracting energy from the combustion gases. Engine 10 may have a centerline CL and comprise vane assembly(ies) 20 and/or 200. Vane assembly(ies) 20 may be disposed in bypass duct 22 of engine 10. Vane assembly(ies) 200 may be disposed in multistage compressor 14 in a core section of engine 10. Bypass duct 22 may define an annular passage (e.g. gas path) for some of the airflow through engine 10 to bypass the core section of engine 10. Although gas turbine engine 10 is illustrated as a turbofan engine, it is understood that the devices, assemblies and methods described herein could also be used in conjunction with other types of gas turbine engines such as, for example, turboshaft and/or turboprop engines.

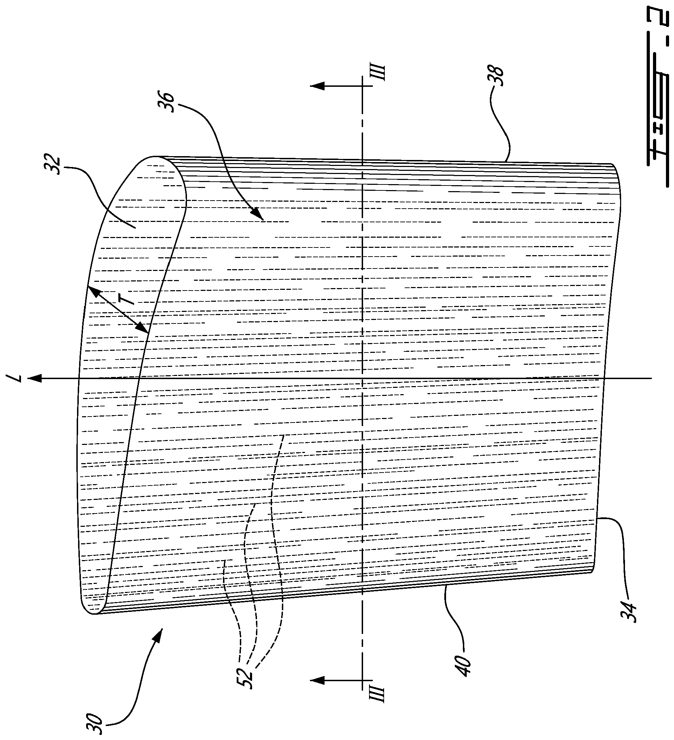

Referring to Fig. 2, a hybrid vane 30 according to an embodiment of the present technology is shown. In some cases, the vane 30 may be one of many vanes found in one or more vane assemblies 200 disposed in the compressor 14 of engine 10, disposed adjacent a plurality of compressor blades (not shown). Such compressor blades may be operable to rotate and propel (i.e. compress) air through compressor 14. The vane assembly(ies) 200 may be used to redirect a stream of air flowing through and being compressed in compressor 14 along a gas path within the engine 10. Vane assembly(ies) 200 may be disposed in a relatively low pressure (e.g. boost) section of compressor 14. In other cases, the vane 30 may be disposed in another vane assembly in the gas turbine engine 10, for instance in vane assembly 20 within the bypass duct 22. Other locations for the vane 30 may be contemplated as well.

Hybrid vane 30 has a vane root 32, a vane tip 34, and an airfoil portion 36 extending therebetween. Various shapes for the airfoil portion 36 may be contemplated such as a foot (not shown) at the vane root 32 and/or at the vane tip 34, integrated inner and/or outer platforms, etc. In some embodiments, for instance where the vane 30 is included among other vanes 30, forming an annular array of vanes, in vane assembly 20 within the bypass duct 22, but not necessarily the case in all embodiments, the vane root 32 may be retained in an inner shroud (not shown) of the vane assembly 20 while the vane tip 34 may be retained in an outer shroud (not shown) of the vane assembly 20. Other configurations for the installation of the vane 30 within different vane assemblies in the gas turbine engine 10 may be contemplated as well. For instance, in an alternate embodiment, a plurality of vanes 30 may be installed in a circumferential array, to collectively form a stator and/or a vane pack, which may be positioned in the compressor 14 or elsewhere in the gas turbine engine 10. The airfoil portion 36 of each vane 30 defines a leading edge 38 and a trailing edge 40, which may be relatively sharp in comparison with a mid-span thickness of the vane, such that a passing airflow, for instance coming from the blades of the fan 12 or compressor 14, flows over the vane airfoil 36 from the leading edge 38 to the trailing edge 40.

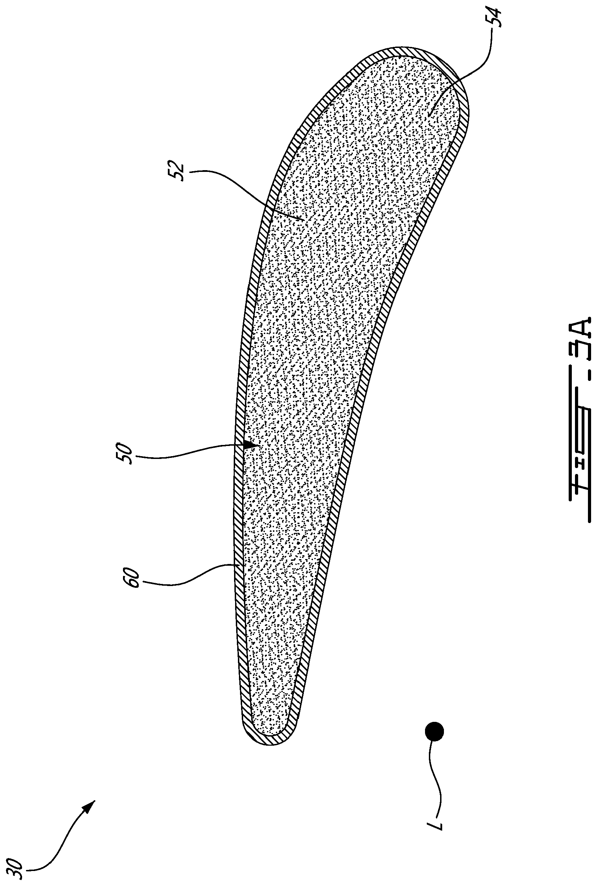

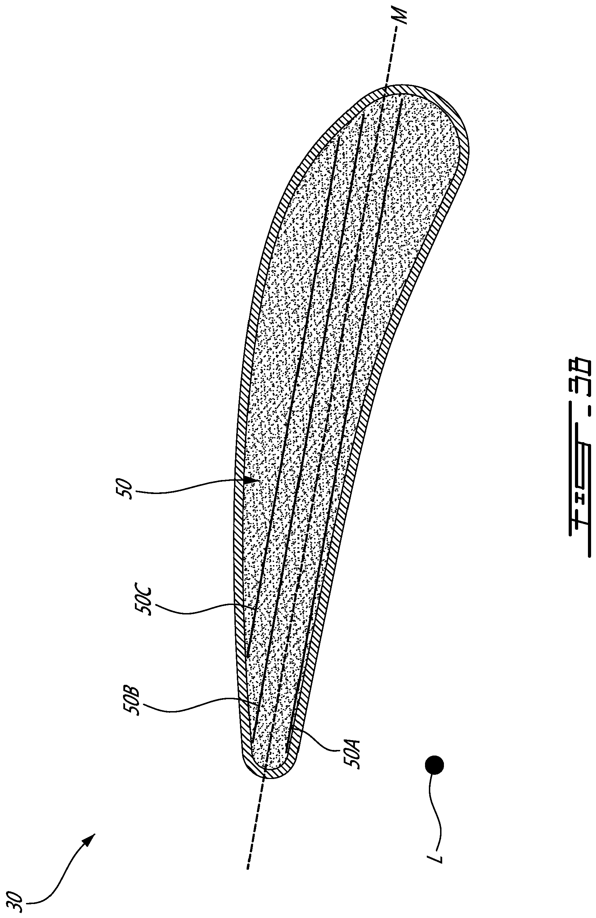

Referring to Figs. 3A and 3B, at least the airfoil portion 36 of each hybrid vane 30, but more particularly the entire vane 30 is formed of a bi-material structure comprising a core 50 made of a fiber-reinforced thermoplastic composite, as will be discussed in further detail below, with a metallic outer coating, shell, or layer 60 which covers at least a portion of the non-metal inner core 50 to define an outer structural surface of the vane 30, and which may in a particular embodiment fully encapsulates the core 50. Accordingly, a "hybrid" vane airfoil is thus provided. For simplicity, the core 50 is illustrated here as being solid, although it is understood that in various embodiments the core 50 of the vane 30 can alternately be at least partially hollow, synthetic foam filled, metallic foam filled, and/or include heating, cooling or weight reduction channels or other openings defined therethrough. As will be seen in further detail below, the core 50 of the vane 30 is at least partially covered (i.e. is either fully encapsulated or only partially coated) by the metallic top coat 60, which may be a single layer coating or a multiple layer coating composed of one or more metals, as will be discussed in further detail below.

The core 50 of the vane 30 is made from a fiber-reinforced thermoplastic composite and thus includes a plurality of fibers 52 embedded within one or more thermoplastic polymers 54. In various embodiments, such a core composition may make the core 50 easier to mold, for instance via compression molding, which may reduce manufacturing costs when compared to machining a metal core (e.g. aluminum), while offering a comparatively lighter and stronger vane 30. In various embodiments, the fibers 52 may be carbon fibers, glass fibers, and/or polyaramid fibers, although other fiber types may be contemplated as well. Various polymer resins may be used to form the thermoplastic polymer(s) 54 such as Polyaryletherketone (PAEK), Polyether ether ketone (PEEK), Polyetherketoneketone (PEKK) and/or Polyphenylene sulfide (PPS). Other thermoplastics may be considered as well. In other embodiments, a thermoset epoxy may be used as a fiber-reinforced polymer in the core, rather than a thermoplastic. In certain embodiments, the use of one or more thermoplastic polymers 54 may improve ductility and erosion resistance compared to typical vane core materials. Additionally, such thermoplastic polymers used for the core may also, in certain embodiments, reduce the required molding or cure time. Additionally, a core formed of a thermoplastic polymer may also be more easily repairable, for instance by compression molding, as thermoplastics may be processed repeatedly above their melting temperatures. The fibers 52 in the core 50 may all be aligned in a single direction, for instance parallel to a longitudinal axis L of the vane 30 (the longitudinal axis L of the fane extending from the vane root 32 to the vane tip 34), or alternatively different layers or plies of fibers 52 may be oriented differently, as will be discussed in further detail below. The core 50 of the vane 30 further includes a vane thickness T that may be variable between the leading edge 38 and trailing edge 40. In the depicted embodiment, although not necessarily in all contemplated embodiments, the vane thickness T is measured in a direction substantially normal to the longitudinal axis, i.e. forming an angle of 90 degrees plus/minus manufacturing tolerances applicable to each particular embodiment, application and/or manufacturing process.

It is understood that gas turbine vanes are typically long and slender, making dynamic resonance an issue if the vane is not sufficiently stiff. As well, the fan inlet and compressor vane must be able to withstand impact and foreign object damage (FOD), including so-called soft FOD caused by ice, hail, and the like. The skilled reader will also understand that the requirement to have a stiff vane for dynamics and deflection control under aerodynamic loading, while remaining tough enough to withstand FOD, is not currently attainable with conventional short fibre polymer technologies.

In some cases, in order to provide adequate stiffness for the vane 30 formed of a fiber-reinforced thermoplastic core 50, and in some cases in order to allow the vane 30 to be dynamically tuned as required. For example, in certain embodiments this tuning may be performed to avoid a natural frequency of the vane at engine operating conditions. The vane 30 includes a single layer of a metal outer coating 60 which at least partially covers or completely encapsulates the polymer core 50, as is illustrated in Fig. 3A. The relative thickness of the metal coating 60 is not shown to scale for clarity. In other embodiments, multiple outer layers may be provided. The metal coating 60 forms an outer encapsulation layer which structurally stiffens and strengthens the vane 30, such as to allow the vane 30 to perform comparably to a conventional metal vane of the type typically used in aero gas turbine engine applications. However, the fiber-reinforced thermoplastic core 50 of the vane 30 may make the vane 30 lighter and its manufacturing process cheaper and/or easier in comparison with standard aluminum vanes.

In a particular embodiment, the metallic outer coating 60 includes a single layer of electroless plating. Such electroless plating may be desirable for its uniform plating thickness, i.e. to maintain an airfoil profile shape unchanged by the plating, whereas an electroplating includes a buildup edge, thus changing the shape of the leading edge 38 of the airfoil portion 36, which may affect the airfoil portion's 36 aerodynamic performance. In other cases, a multilayer outer coating 60 including two or more layers, for instance an electroplating as well as electroless plating, may be used. In cases, processing steps and methods to minimize the built-up edge due to the electroplating may be implemented. In such cases, multiple metallic plating layers having different mechanical properties may provide additional degrees of freedom to tune the vane dynamics, for instance by varying the thickness of each layer as needed. In a particular embodiment, the overall thickness of a multilayer metallic outer coating 60 may not exceed 0.008 inches (plus/minus manufacturing tolerances applicable to each particular embodiment, application and/or manufacturing process), whereas the thickness of an individual metallic plate may be as thin as 0.0005 inches or less. Other thicknesses may be contemplated as well. In various cases, the electroless plating layer(s) may include nickel, copper, or combinations thereof. If present, the electroplating layer(s) may include nickel, copper, iron, cobalt, or combinations thereof. Other metals may be contemplated as well.

In order to reduce the effects of thermal cycling on the vane, the selection of the thermoplastic polymer(s) 54 for the core 50 and metal for the coating 60 may involve selecting a combination which minimizes differential thermal expansion and thermal stresses between both materials. Additionally, the selection may be made to choose material combinations that have the highest bond strength. Doing so may assist in impeding the occurrence of debonding between the coating 60 and the core 50.

The metal coating 60 may be applied to the core 50 regardless of the complexity of the shape of the airfoil 36, and also allows the leading edge 38 to be very sharp, e.g. 0.001 inch thick (0.0254 mm), such as to minimize the boundary layer effect and as such may improve performance.

In a particular embodiment, the metal coating 60 is a plated coating, i.e. is applied through a plating process in a bath, to apply the metallic coating to the non-metallic substrate, such as to be able to accommodate complex vane geometries with a relatively low fabrication cost. Any suitable coating process can be used. Any suitable number of plating layers may also be provided. In other cases, the metal coating 60 may be applied to the core 50 via another suitable application process, such as by vapour deposition of the metal coating, for example. Other application processes may be considered as well.

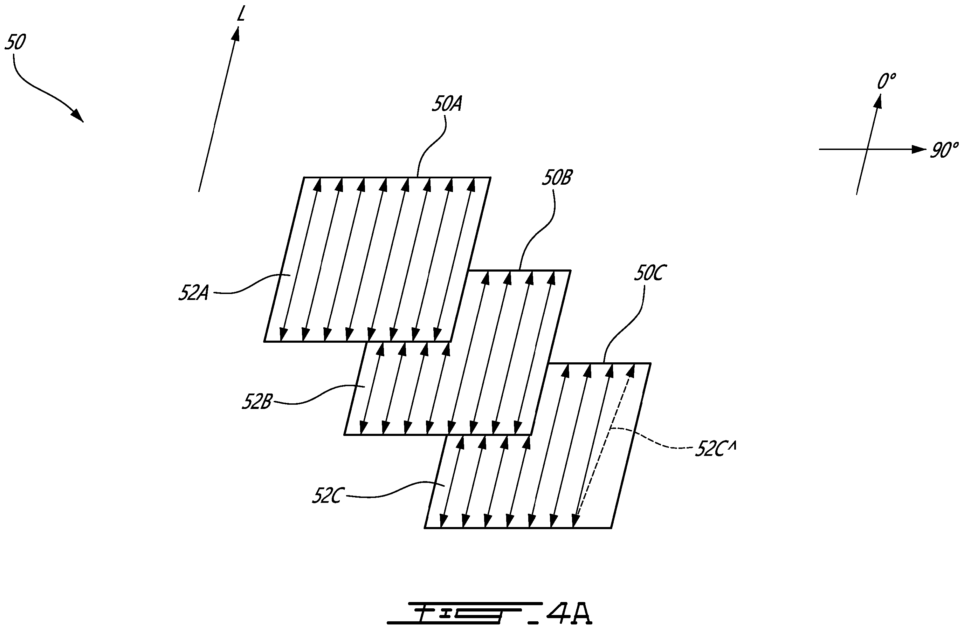

Referring now to Fig. 3B and 4A, the core 50 is shown to have multiple layers of fibers 52 that may be stacked in a direction normal to the longitudinal axis L. In the shown embodiment, the layers are stacked to form the vane thickness T in a direction normal to the longitudinal axis L. The vane thickness T may also be measured in a plan that is itself substantially normal to the longitudinal axis L. However, it is to be understood that in alternate embodiments, other stackable directions in a direction normal to the longitudinal axis L may be contemplated as well, for instance having fiber layers stacked from the leading edge 38 towards the trailing edge 40. As will be discussed in further detail below, a mid-plane M bisects the stacked layers, illustratively towards the midpoint of thickness T. For simplicity, only three layers 50A, 50B, 50C are shown, and in Fig. 4A each layer is represented in rectangular form, whereas in reality each layer would take the shape of the core 50 and the number of layers would be a function of the thickness T of the core 50 at a given position between the leading edge 38 and the trailing edge 40 and the thickness of each layer. For instance, each layer of fibers 52 may be approximately ten thousandths of an inch in thickness, while the thickness T of the core 50 at its thickest point, illustratively around the mid-chord of the vane 30, may be over one hundred thousandths of an inch, requiring more than ten stacked fiber layers. Other thicknesses and numbers of layers may be contemplated as well. Such layers may be formed or stacked via heat tacking or hot form molding, although other processes may be considered as well. In the shown embodiment, although not necessarily the case in all embodiments, each layer 50A, 50B, 50C includes fibers 52A, 52B, 52C oriented in a same fiber direction. In the shown embodiment, although not necessarily the case in all embodiments, each of the fiber layers include fibers 52 oriented in a 0 degree orientation based on the shown coordinate scheme, which in this case would be parallel to the longitudinal axis L of the vane 30, i.e. forming an angle of zero degrees with the longitudinal axis plus/minus manufacturing tolerances applicable to each particular embodiment, application and/or manufacturing process. For instance, in some cases the angle between the fibers 52 and the longitudinal axis L may vary by up to plus/minus ten degrees due to the above-mentioned factors or other factors. Illustratively, fiber 52C^, which is slightly angled relative to the other fibers 52 and the longitudinal axis L, may fall within a satisfactory range to be considered parallel to the longitudinal axis L. In other cases, the layers may include fibers 52 that are oriented in a same fiber direction that is not parallel with the longitudinal axis L, and/or may contain fibers 52 oriented in a wave-like direction, as will be discussed in further detail below. In other cases, In various cases, a core 50 having unidirectional fibers 52 may be cheaper to process, as the required time would be reduced as the orientation of the layers need not be adjusted between each layering step. In various cases, the vane 30 may be stronger in the direction in which the fibers 52 are oriented. As such, in cases where the unidirectional fibers 52 are parallel to the longitudinal axis L of the vane 30, the vane 30 will be strongest in this direction with regards to flexural bending, while the metal outer coating 60 may provide additional strength in the other directions. In various embodiments, such unidirectional fibers 52 may prove especially useful towards the leading edge 38 and trailing edge 40 of the vane 30 by ensuring consistent and uniform distribution throughout, providing high specific strength and a specific modulus for the vane 30.

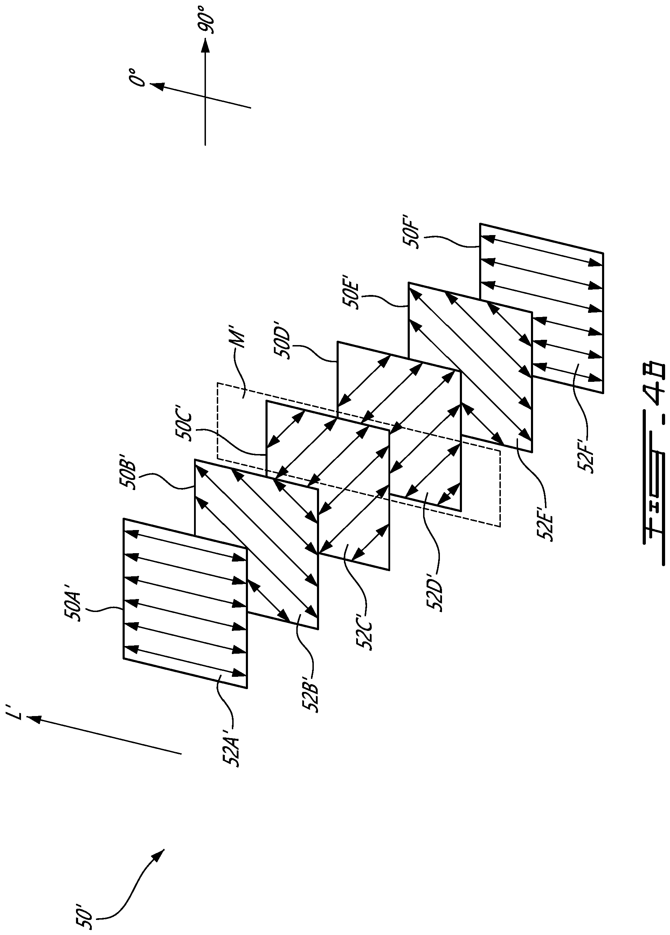

Referring now to Fig. 4B, alternatively in some cases the core 50' of a vane 30' (not shown) may have various layers, illustratively layers 50A', 50B' 50C', 50D', 50E', 50F' having their respective fibers 52A', 52B', 52C', 52D', 52E', 52F' oriented differently, i.e. in different angular orientations in a symmetrical layup. In other words, each layer may include fibers 52' oriented in parallel with one another, but the fibers 52' from different layers may be oriented differently. It is to be understood that any reference to elements such as the vane 30', core 50', leading edge 38', trailing edge 40', longitudinal axis L', thickness T', etc. generally correspond to the previously discussed vane 30, core 50, leading edge 38, trailing edge 40, longitudinal axis L, and thickness T in the context of multiple angular oriented fiber layers as per Fig. 4B. As was the case in Fig. 4A, for simplicity, only six layers 50A', 50B', 50C', 50D', 50E', 50F' of the core 50' are shown, and each layer is represented in rectangular form. By providing layers with their respective fibers 52' oriented differently, strength may be provided to the vane 30' in different directions, rather than the unidirectional strength provided by the unidirectional fibers 52 in vane 30 shown in Fig. 4A. For instance, in cases where the metallic outer coating 60 is relatively thin and thus may not provide adequate strength in all directions, in one particular embodiment the layers of fibers 52' may have different fiber orientations, which may help to distribute the strength provided by said fibers 52'.

As was the case in Fig. 4A, the various layers of fibers 52' shown in Fig. 4B may be stacked to form a thickness T' of the core 50' (not shown), i.e. in a direction normal to the longitudinal axis L'. In such cases of fibers 52' having different orientations, to ensure that the layers of the core 50' will not distort after curing, the layup of the various layers should be symmetrical or mirrored about the mid-plane M'. By symmetrical, it is intended that corresponding layers on either side of the mid-plane M' would have fibers 52' having mirror-image oriented directions so as to create a balance with respect to the mid-plane M'. For instance, in the shown case, but not necessarily in all cases, the mid-plane M' would be formed between the two middle layers 50C', 50D'. In other cases, for instance where an odd number of layers are present, the mid-plane M' may be represented by the middle stacked layer. As was the case in Fig. 4A, the 0 degree direction in Fig. 4B may correspond to the longitudinal axis L' of the vane 30'. The layers above the mid-plane M' would then be mirror images in their fiber orientations to the layers below the mid-plane M'. For instance, in the shown embodiment, but not necessarily the case in all embodiments, mirrored layers 50A' and 50F' would have fibers 52A', 52F', respectively that are oriented in a 0 degree direction, mirrored layers 50B' and 50E' would have fibers 52B', 52E', respectively that are oriented in a 45 degree direction, and mirrored layers 50C' and 50D' would have fibers 52C', 52D', respectively that are oriented in a -45 degree direction.

As discussed above, the number of layers of the core 50' may vary, for instance due to the thickness T' of the core 50' at a given position between the leading edge 38' and the trailing edge 40' and the thickness of the layers. As discussed above, in cases where there are an odd number of layers, there may be only one central layer about which the other layers are symmetrical, i.e. the central layer represents the mid-plane M'. In addition, as the thickness T' may vary between the leading edge 38' and the trailing edge 40', the number of fiber layers would vary as well. In such cases, the mid-plane M' position would remain consistent throughout the core 50' between the leading edge 38' and the trailing edge 40' while the number of layers on either side of the mid-plane M' may vary between the leading edge 38' and the trailing edge 40', accounting for the differences in thickness T' throughout the core 50'. In different cases, the relative orientations of the fibers 52' in each layer may vary, for instance for different strength profiles of the vane, so long as the relative fiber orientations of each layer are symmetrical on either side of the mid-plane M'.

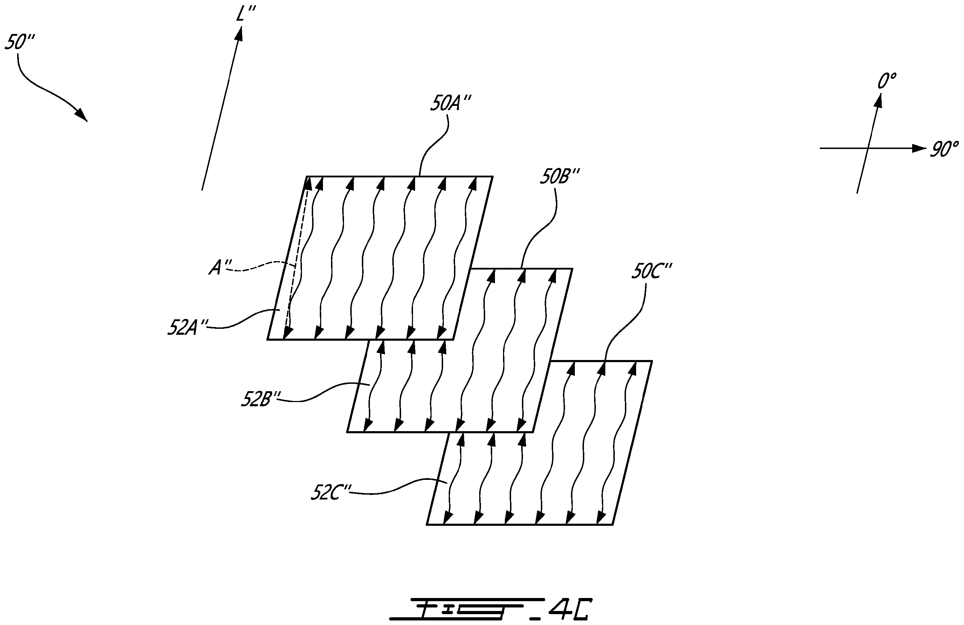

Referring to Fig. 4C, as discussed above, in some cases the fibers 52" may have a wave-like shape rather than the linear fibers 52, 52' shown in Figs. 4A-4B. Illustratively, layers 50A", 50B", 50C" may include fibers 52A", 52B", 52C" having wavy or non-linear patterns. In such cases, the non-linear fibers 52" may include a fiber axis A" extending between opposing ends of each fiber, 52", one of which is illustratively shown adjacent one of the fibers 52" for clarity. In various cases, fibers 52" on a given layer may include fiber axes A" that are parallel to one another, and illustratively parallel to the longitudinal axis L". As such, each layer 50A", 50B", 50C" respective fibers 52A", 52B", 52C" oriented in a direction parallel with one another due to the parallel orientation of their respective fiber axes A". In other cases, each layer may include fibers 52" having parallel fiber axes 52A", which each layer oriented in a different direction and mirrored about a mid-pane M" (not shown), as was the case in Fig. 4C. Other arrangements may be contemplated as well.

It has been found that flightworthy vanes may be provided using fiber-reinforced thermoplastic cores having a metallic outer coating, which may result in a significant cost advantage compared to comparable composite vanes or more traditional aluminum, steel or other metal vanes typically used in gas turbine engines. Accordingly, the present vanes may be cheaper to produce and be of lighter weight than traditional solid metal vanes, while nevertheless providing comparable strength and other structural properties, and therefore offer a comparable if not improved life-span. For example, due to the improved resistance to foreign object damage (FOD) and erosion of the present vanes, reduced field maintenance of the gas turbine engine may be possible, as well as increased time between overhauls (TBO).

In various cases, the metallic outer coating 60 may have mechanical properties which are superior to those of the core 50. In effect, the outer coating 60 provides a structural member which enables the use of a lighter substrate as the core 50, resulting in a lighter overall vane 30. Additionally, the structural combination of the two materials may provide good impact resistance, which is desirable for resistance to so-called "soft" FOD caused by hail or other weather conditions, for example. Beneficially, in various cases the outer coating 60 may also provide erosion protection to the vane 30, or at a minimum provide erosion resistance comparable to conventional aluminum vanes. As such, in cases where the core 50 is completely surrounded by the metallic outer coating 60, there may be no need to apply a dedicated erosion resistance treatment to the core 50. In addition, in embodiments where the metal outer coating 60 completely surrounds the core 50, the vane 30 may benefit from the various mechanical properties of the chosen core 50 materials while ensuring that the core 50 is protected from various environmental factors such as moisture, solvents, aviation fluids etc. by the outer coating 60.

Additionally, as noted above, the thickness of the metallic outer coating 60, which provides at least some of the structural integrity for the hybrid vane 30, may be adjusted and/or varied as required on the core, for example in order to reduce stresses and stiffen the vane in order to reduce deflections in the vane 30 and to dynamically tune the vane 30 as required. In various cases, the dimensions (for instance the thicknesses) of both the core 50 and the metallic outer coating 60 may be chosen to dynamically tune the vane 30 as required. For instance, if an overall vane size is known, the individual dimensions of the core 50 and the outer coating 60 can be selected to reach a desired level of dynamic tuning, with an increase in one's sizing resulting in a decrease in the other's sizing (or vice-versa) to respect the desired overall dimension of the vane. In addition, as discussed above, the orientation of the fibers 52 on the layers in the core 50 may aid in dynamically tuning a vane 30. For instance, if the thickness of the outer coating 60 is to be minimize to reach a certain level of dynamic tuning, thus reducing the strength provided by the outer coating, the fibers 52 on the different layers may be oriented differently so that the core 50 provides added strength to the vane 30 (as discussed above). Other methods for dynamically tuning the vane 30 may be contemplated as well, for instance by choosing certain materials for the core 50 and/or outer coating 60 over others, and/or by the orientation of the fibers 52 in the core 50, and/or by the choice of materials for the outer 60 in combination with the layering thicknesses of the coating materials.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A hybrid vane (30) for a gas turbine engine (10), the hybrid vane (30) comprising:
an airfoil (36) having an inner core (50) composed of a fiber-reinforced thermoplastic composite (54), a longitudinal axis (L) of the hybrid vane (30) extending between a vane root (32) and a vane tip (34); and
a metallic outer layer (60) at least partially covering the inner core (50).

2. The hybrid vane (30) as defined in claim 1, wherein the fiber-reinforced thermoplastic composite (54) includes a plurality of stacked layers of fibers (50) forming a core thickness (T) in a direction normal to the longitudinal axis (L), each layer (50) including a plurality of fibers (52) oriented in a direction parallel with one another.

3. The hybrid vane (30) as defined in claim 2, wherein the plurality of fibers (52) are oriented in a direction parallel to the longitudinal axis (L), or the directions of each of the plurality of layers of fibers (50) are oriented symmetrically with respect to a mid-plane (M) bisecting the stacked layers of fibers (50).

4. The hybrid vane (30) as defined in any of the preceding claims, wherein the hybrid vane (30) is dynamically tunable by varying a thickness of the metallic outer layer (60) and/or a thickness of the inner core (50).

5. The hybrid vane (30) as defined in any of the preceding claims, wherein the fiber-reinforced thermoplastic inner core (50) includes PAEK, PEEK, PEKK, PPS, carbon, glass and/or polyaramid.

6. The hybrid vane (30) as defined in any of the preceding claims, wherein the metallic outer layer (60) is an electroless plate.

7. The hybrid vane (30) as defined in any of the preceding claims, wherein the metallic outer layer (60) includes two or more metallic layers, the two or more metallic layers optionally including one or more electroless plates and/or electroplates.

8. The hybrid vane (30) as defined in claim 7, wherein the two or more metallic layers have a thickness of less than or equal to 0.008 inches.

9. The hybrid vane (30) as defined in any of the preceding claims, wherein the metallic outer layer (60) includes a thickness of greater than or equal to 0.0005 inches.

10. The hybrid vane (30) as defined in any of the preceding claims, wherein the metallic outer layer (60) includes nickel, copper, iron, and/or cobalt.

11. A method of manufacturing a hybrid vane (30) for a gas turbine engine (10), the method comprising:
forming an airfoil (36) out of a fiber-reinforced thermoplastic composite (54) to form an inner core (50), a longitudinal axis (L) of the hybrid vane (30) extending between a vane root (32) and a vane tip (34); and
applying at least one layer of a metal coating (60) onto the inner core (50), the metal coating (60) at least partially covering the inner core (50) and defining an outer structural surface of the vane (30).

12. The method as defined in claim 11, wherein the step of forming the airfoil further includes compression molding the inner core (50), the step of applying optionally including fully encapsulating the inner core (50) with the metal coating (60).

13. The method as defined in claim 11 or 12, wherein the step of forming the airfoil further includes forming the core (50) out of PAEK, PEEK, PEKK, PPS, carbon, glass and/or polyaramid, and optionally wherein the step of applying further includes applying one or more electroless plate and/or electroplates including nickel, copper, iron, and/or cobalt.

14. The method as defined in any one of claims 11 to 13, further comprising varying a thickness of the inner core (50) and/or a thickness of the metal coating (60) to dynamically tune the hybrid vane (30).

15. The method as defined in any one of claims 11 to 14, wherein forming the airfoil further includes stacking a plurality of fiber layers (50), each layer including a plurality of fibers (52), to form a thickness (T) in a direction normal to the longitudinal axis (L), and orienting the plurality of fibers (52) in a direction parallel to the longitudinal axis (L) and/or orienting the fibers (52) on each layer such that the plurality of layers (50) are oriented symmetrically with respect to at least one centrally stacked fiber layer.
